# EUROPÄISCHE PATENTSCHRIFT

(11) **EP 2 688 740 B1**
(45) Veröffentlichungstag und Bekanntmachung des Hinweises auf die Patenterteilung: **05.08.2020**
(21) Anmeldenummer: 12721711.5
(22) Anmeldetag: 26.03.2012
(51) Int. Cl.: B30B 11/02, B30B 15/02

(54) **PRESSE ZUR HERSTELLUNG EINES FORMTEILS UND VERFAHREN ZUM WECHSELN EINER MATRIZE AN EINER PRESSE**
PRESS FOR PRODUCING A MOULDED PART AND METHOD FOR CHANGING A DIE ON A PRESS
PRESSE POUR PRODUIRE UNE PIÈCE MOULÉE ET PROCÉDÉ POUR CHANGER UNE MATRICE SUR UNE PRESSE

(30) Priorität: 24.03.2011 DE 102011015050
(43) Veröffentlichungstag der Anmeldung: 29.01.2014
(73) Patentinhaber: SMS group GmbH, 40237 Düsseldorf (DE)
(72) Erfinder: SOLTY, Walter, 41836 Hückelhoven (DE); NIES, Norbert, 41470 Neuss (DE); HOPPENKAMPS, Nikolaus, 41063 Mönchengladbach (DE)
(74) Vertreter: Reuther, Martin
(86) Internationale Anmeldenummer: PCT/DE2012/000311
(87) Internationale Veröffentlichungsnummer: WO 2012/126462

(56) Entgegenhaltungen:
- EP-A2- 0 436 792
- DE-B3-102005 027 296
- JP-A- S4 846 970
- JP-A- 48 046 970
- JP-A- S58 107 401

## Beschreibung

Zum einen betrifft die Erfindung eine Presse zur Herstellung eines Formteils aus einem rieselfähigen Material mit einer Vorrichtung zum Antreiben einer Matrize umfassend eine Zylindereinheit mit einem Zylindergehäuse und mit einem Zylinderkolben. Zum anderen betrifft die Erfindung eine Presse zur Herstellung eines Formteils aus einem rieselfähigen Material mit einem auswechselbaren Adapter umfassend eine Presseinheit zum Aufnehmen einer Matrize. Auch betrifft die Erfindung ein Verfahren zum Wechseln einer Matrize an einer Presse zur Herstellung eines Formteils aus einem rieselfähigen Material, bei welchem ein die Matrize umfassender auswechselbarer Adapter aus einer Rüstposition in eine Pressposition oder umgekehrt überführt werden kann.

Im Allgemeinen sind gattungsgemäße Pressen zum Herstellen eines Formteils aus einem rieselfähigen Material aus dem Stand der Technik speziell in Gestalt von Pulverpressen gut bekannt. Bei diesen wird das zu pressende Pulver in eine Matrize eingefüllt. Anschließend wird das in der Matrize befindliche Pulver mittels eines Pressstempels zu dem gewünschten Formteil verdichtet. Letztlich wird das so gepresste Formteil aus der Matrize ausgeworfen und die Matrize kann erneut mit Pulver befüllt werden.

Eine diesbezügliche hydraulische Pulverpresse ist beispielhaft in der Offenlegungsschrift DE 28 25 253 A1 gezeigt. Die dort gezeigte Pulverpresse umfasst ein Pressenbett, von welchem zwei vertikale Säulen aufragen, die an ihren oberen Enden einen gemeinsamen Querträger tragen. In dem Querträger ist ein Pressenstempel geführt, der in senkrechter Pressrichtung nach unten arbeitet. Oberhalb des Pressenbetts ist eine Auflage für eine Matrizenschüssel vorgesehen. An der Matrizenschüssel kann jeweils einer von zwei Presstöpfen der Pulverpresse befestigt werden. In die Presstöpfe wird das Pulver eingefüllt, welches mittels des Pressenstempels zusammengepresst werden soll. Obwohl die beiden Presstöpfe schwenkbar an einer der beiden vertikalen Säulen angebracht sind, ist es relativ zeitaufwändig, die Pulverpresse auf ein anderes Formteil umzurüsten. Insofern kann die Pulverpresse einen entsprechend langen Zeitraum auch nicht produzieren. Die Patentschrift DE 10 2005 027 296 B3 offenbart eine presse gemäß dem Oberbegriff des Anspruchs 1, und ein Verfahren gemäß dem Oberbegriff des Anspruchs 4.

Aus der Patentschrift DE 10 2005 027 296 B3 ist eine Vorrichtung zum Herstellen eines Formteils aus Pulver bekannt, die mindestens einen in eine Pressrichtung verfahrbaren Pressstempel und mindestens eine Matrize zum Ausbilden des Formteils aufweist. Da bei dieser Vorrichtung in Pressrichtung mindestens zwei Matrizen Übereinander angeordnet sind, wobei mindestens eine Matrize den Pressstempel für eine benachbarte Matrize trägt, können pro Zykluszeit vorteilhafter Weise mehrere Formteile gleichzeitig hergestellt werden. Um auch eine Umrüstung der Vorrichtung auf ein anderes Formteil einfacher zu gestalten, wird in dieser Druckschrift vorgeschlagen, zumindest die Matrizen samt den Pressstempeln als eine einen Adapter bildende Einheit auszugestalten, die auswechselbar in der Vorrichtung angeordnet werden kann. Jedoch kann es durch umliegendes Pulver hierbei auch weiterhin zu Verschmutzungen der Bewegungsmittel am Matrizenantrieb kommen, wodurch das Umrüsten auf andere Formteile verzögert werden kann. Zudem können derartige Verschmutzungen zu engeren Wartungsintervallen hinsichtlich des Matrizenantriebs führen.

Auch die DE 41 42 352 A1, die AT 008 232 U1. die JP 58-107401 A und die SU 1 771 880 A1 offenbaren Pressen zur Herstellung eines Formteils aus einem rieselfähigen Material, wobei bis auf letztere Druckschrift auch dort die Matrizen samt den Pressstempeln als eine einen Adapter bildende Einheit ausgestaltet sind. Wobei jedoch die JP 58-107401 A und die AT 008 232 U1 relativ komplexe Anordnungen offenbaren, bei denen insbesondere eine Traverse unterhalb eines Grundkörpers, an dem der jeweilige Adapter verschiebbar gelagert ist, zu finden ist, so dass die gesamte Presse sehr aufwändig baut. Diesen Nachteil weist die DE 41 42 352 A1 nicht auf, die jedoch rein konstruktiv lediglich zwei derartige Adapter ermöglicht, da diese schwankbar an Armen seitlich der eigentlichen Presse vorgesehen sind, so dass die Adapter nur bedingt ein Umrüsten erleichtern.

Es ist Aufgabe vorliegender Erfindung, gattungsgemäße Pressen derart weiterzuentwickeln, dass ein Umrüsten auf ein anderes Formteil bzw. auf eine andere Matrize schneller vorgenommen werden kann.

Nach Anspruch 1 wird die Aufgabe vorliegender Erfindung von einer Presse zur Herstellung eines Formteils aus einem rieselfähigen Material mit einem auswechselbaren Adapter, der eine Presseinheit zum Aufnehmen einer Matrize umfasst, und mit einer Vorrichtung zum Antreiben der Matrize umfassend eine Zylindereinheit mit einem Zylindergehäuse und mit einem Zylinderkolben gelost, wobei die Presseinheit eine obere Traverse und eine untere Traverse aufweist, die mittels Säulen voneinander beabstandet gehalten sind, an welchen eine Matrizenaufnahmeplatte der Presseinheit verschiebbar gelagert ist und wobei sich die Presse dadurch auszeichnet, dass das Zylindergehäuse der Aktor der Zylindereinheit und der Zylinderkolben der Stator der hydraulischen Zylindereinheit ist, wobei der Zylinderkolben als ein in Bezug auf die Zylindereinheit feststehender Ringkolben als Bestandteil des Stators an der hydraulischen Zylindereinheit ausgestaltet ist, wobei sowohl der Zylinderkolben als auch das Zylindergehäuse der hydraulischen Zylindereinheit konzentrisch um eine mittlere Pressachse der Presse herum angeordnet sind.

Im Gegensatz zu herkömmlichen Hydraulikzylindern, die in bekannter Weise als Bewegungsmittel für eine Matrize bzw. für eine Einrichtung zum Aufnehmen einer solchen Matrize eingesetzt werden, bewegt sich vorliegend nicht eine Zylinderkolbenstange mit der Matrize sondern das Zylindergehäuse der Zylindereinheit mit der Matrize. Insofern führt die Matrize eine Relativbewegung gegenüber der Zylinderkolbenstange durch. Vorteilhafter Weise wird hierdurch die Gefahr signifikant verringert, dass in die Umgebung der Zylindereinheit gelangtes Pulver an sensible Bauteile, wie beispielsweise an Dichtungen, des Zylinders gelangt und es infolge dessen zu Funktionsstörungen kommt. Insofern braucht die Zylindereinheit weniger intensiv gewartet zu werden, wodurch sich insbesondere die Dauer eines Umrüstens der Presse beim Austausch eines auswechselbaren Adapters vorteilhaft reduzieren lässt. Ein manuelles Eingreifen durch Bedienpersonal wird hierdurch vorteilhafter Weise überflüssig bzw. auf ein Minimum reduziert.

Der Begriff "Aktor" beschreibt im Sinne vorliegender Erfindung im Wesentlichen das bewegte Bauteil der Zylindereinheit gegenüber der Presse und bezieht sich auf die Funktion eines Matrizenantriebs innerhalb der Presse. Dieses bewegte Bauteil ist vorliegend das Zylindergehäuse der Zylindereinheit, an welchem beispielsweise eine Matrizenaufnahmeplatte befestigt ist. Insofern beschreibt der Begriff "Stator" im Sinne vorliegender Erfindung das unbewegte Bauteil der Zylindereinheit hinsichtlich eines Matrizenantriebs. Dieses unbewegte Bauteil ist vorliegend der Zylinderkolben der Zylindereinheit.

In diesem Zusammenhang wird die Aufgabe der Erfindung auch von einem Verfahren gemäß Anspruch 4 zum Wechseln einer Matrize an einer Presse zur Herstellung eines Formteils aus einem rieselfähigen Material, bei welchem ein die Matrize umfassender auswechselbarer Adapter aus einer Rüstposition in eine Pressposition oder umgekehrt überführt werden kann, gelöst, welches sich insbesondere dadurch auszeichnet, dass die Matrize von einer hydraulischen Zylindereinheit angetrieben wird, bei welcher ein Zylindergehäuse der hydraulischen Zylindereinheit als Aktor gegenüber einem einen feststehenden Ringkolben als Bestandteil des Stators an der Zylindereinheit aufweisenden Zylinderkolben der hydraulischen Zylindereinheit als Stator verlagert wird und hierdurch die Matrize von dem Zylindergehäuse angetrieben wird, wobei sowohl der Zylinderkolben als auch das Zylindergehäuse der hydraulischen Zylindereinheit konzentrisch um eine mittlere Pressachse der Presse herum verlagert werden.

Insbesondere das Austauschen von Matrizen an einer Presse kann verfahrenstechnisch besonders einfach durchgerührt werden, wenn die Matrize von einer hydraulischen Zylindereinheit angetrieben wird, bei welcher das Zylindergehäuse der hydraulischen Zylindereinheit als Aktor gegenüber einem Zylinderkolben der hydraulischen Zylindereinheit als Stator verlagert wird und hierbei die Matrize von dem Zylindergehäuse ungetrieben wird.

Der Begriff "auswechselbarer Adapter" beschreibt eine Vorrichtung mit einem Gestell, welche zumindest eine Matrizenaufnahme und eine diesbezügliche Mechanik umfasst. Vorzugsweise beinhaltet der auswechselbare Adapter sogleich eine bei Pressen übliche Presseinheit, welche im Wesentlichen aus einem Obergurt, einem Untergurt und dazwischen angeordneten Säulen besteht.

Unter einer "Pressposition" versteht man vorliegend eine betriebsbereite Position des Adapters innerhalb des Arbeitsbereichs der Presse.

Bei der "Rüstposition" handelt es sich um eine Position des Adapters außerhalb der Presse, in welcher entweder unterschiedlich bestückte Adapter oder zumindest die Matrize eines Adapters vorteilhaft ausgewechselt und mit rieselfähigem Material befüllt werden können.

Es versteht sich, dass die vorstehend beschriebene Verfahrensvariante noch durch weitere Verfahrensschritte ergänzt und verbessert werden kann, wie sie später noch erläutert werden.

Die Erfindung sieht vor, dass der Zylinderkolben einen in Bezug auf die Zylindereinheit feststehenden Ringkolben umfasst. Der feststehende Ringkolben ist somit bei dieser Ausführungsvariante ein wesentlicher Bestandteil des Stators an der Zylindereinheit. Aufgrund des feststehenden Ringkolbens baut die Zylindereinheit an sich bereits sehr stabil, sodass gegebenenfalls auf weitere Stütz- und Führungsbauteile verzichtet werden könnte. In alternativen Ausführungsvarianten können zu dem vorgenannten Zweck auch mehrere Einzelkolben vorgesehen sein.

Es versteht sich, dass an dem feststehenden Ringkolben der Aktor der Zylindereinheit innen und/oder außen geführt werden kann. Bevorzugt wird eine Außenführung an dem feststehenden Ringkolben, sodass innerhalb des feststehenden Ringkolbens genügend Bauraum für weitere Bauteile der vorliegenden Presse zur Verfügung steht, wie beispielsweise für eine Auswerfeinrichtung des gepressten Formteils.

Ist das Zylindergehäuse gegenüber der Zylindereinheit außen am Stator der Zylindereinheit verschieblich, vorzugsweise translatorisch verlagerbar angeordnet, kann das Zylindergehäuse zumindest in radialer Richtung nahezu beliebig dimensioniert werden, ohne dass es von baulichen Abmessungen des Stators beschränkt wird.

Außerdem können aufgrund des relativ großen Durchmessers des feststehenden Ringkolbens zwischen dem Aktor und Stator wirkende Kräfte gut von der Zylindereinheit aufgenommen werden.

Das Zylindergehäuse kann besonders problemlos als Aktor der Zylindereinheit ausgestaltet bzw. baulich umgesetzt werden, wenn das Zylindergehäuse ortsfest an einer Matrizenaufnahme der Matrize angeordnet ist.

Erfindungsgemäß sind der Stator und der Aktor der Zylindereinheit konzentrisch um die mittlere Pressenachse der Presse herum angeordnet. Eine derartige Lagewahl erlaubt ein besonders symmetrisches Einleiten von Bearbeitungs- bzw. Verstellkräften in die Zylindereinheit, wodurch diese sehr kompakt gebaut werden kann.

Allein die vorstehend genannten Merkmale entwickeln herkömmliche Pressen bereits vorteilhaft weiter.

Gemäß eines weiteren Aspekts vorliegender Erfindung wird die Aufgabe der Erfindung auch von einer Presse zur Herstellung eines Formteils aus einem rieselfähigen Material mit einem auswechselbaren Adapter umfassend eine Presseinheit zum Aufnehmen einer Matrize gelöst, wobei sich die Presse durch einen Vertikalantrieb für den auswechselbaren Adapter mit einer Einrichtung zum Heben und/oder Senken des auswechselbaren Adapters, wobei die Hebeund/oder Senkeinrichtung unterseitig des auswechselbaren Adapters angeordnet ist, auszeichnet. Auch hierdurch entfallen vorteilhafter Weise manuelle Justier- und/oder Anpassarbeiten. insbesondere in Abgrenzung auch zu der DE 41 42 352 A1, bei welcher seitlich und oberhalb der Unterkante eines auswechselbaren Adapters jeweils Klemmvorrichtungen vorgesehen sind, welche den Adapter jeweils nach unten drücken und absenken können.

Der Begriff "Vertikalantrieb" beschreibt im vorliegenden Sinne eine Vorrichtung der Presse, mittels welcher der auswechselbare Adapter in vertikaler Richtung angehoben bzw. abgesenkt werden kann. Der Vertikalantrieb kann die unterschiedlichsten Antriebsmittel umfassen, beispielsweise elektrisch, hydraulisch und/oder pneumatisch betriebene Antriebsmittel.

Mittels eines derartigen Vertikalantriebs für den auswechselbaren Adapter ist auch ein sehr schnelles Lösen bzw. Klemmen des auswechselbaren Adapters von bzw. an der Presse möglich.

Ein betriebssicheres Handhaben des auswechselbaren Adapters gelingt sehr gut, wenn die Hebe- und/oder Senkeinrichtung für den auswechselbaren Adapter wenigstens einen hydraulischen Zylinder, insbesondere einen hydraulischen Adapterklemmzylinder und vier hydraulische Fahrbahnzylinder, umfasst. Ein hydraulischer Zylinder kann problemlos genügend hohe Betriebskräfte aufbringen, um den Adapter zu halten bzw. entgegen die Schwerkraft anzuheben. Ebenso kann bereits ein hydraulischer Zylinder ausreichen, um den Adapter entgegen einer Hebekraft nach unten zu ziehen und auf diese Weise zu sichern.

Verfügt die Hebe- und/oder Senkeinrichtung insbesondere über einen solchen hydraulischen Adapterklemmzylinder, kann der auszuwechselnde Adapter mittels des hydraulischen Adapterklemmzylinders innerhalb der Presse bereits in einem ausreichenden Maße geklemmt werden, um nach dem Klemmen den Pressvorgang betriebssicher durchführen zu können. Der Adapterklemmzylinder kann hierbei in einer bevorzugten Ausführungsvariante zentral vorgesehen sein, insbesondere in der mittleren Pressachse, und auf diese Weise einfach und betriebssicher gleichförmig auf den Adapter wirken. Es versteht sich, dass auch mehrere Adapterklemmzylinder vorgesehen sein können, die außermittig an dem Adapter klemmend angreifen.

Verfügt die Hebe- und/oder Senkeinrichtung auch über hydraulische Fahrbahnzylinder kann vorteilhafter Weise die komplette Fahrbahn oder Teile hiervon zumindest im Bereich der Presse abgesenkt werden, wodurch eine Vertikalbewegung des Adapters sehr einfach praktiziert werden kann. Durch ein solches Absenken der Fahrbahn kann der auswechselbare Adapter innerhalb der Presse selbst während einer Vertikalbewegung hervorragend stabilisiert werden. Vorzugsweise sind hierfür vier hydraulische Fahrbahnzylinder im Einsatz, so dass betriebssicher ein gleichförmiges Absenken und Anheben realisiert werden kann. Ein Absenken der Fahrbahn ermöglicht darüber hinaus bei einer geeigneten Ausgestaltung der Gesamtanordnung, dass auf weitere Baugruppen an dem Adapter, welche hinsichtlich des Absenkens notwendig sein könnten, weitestgehend verzichtet werden kann, so dass die einzelnen Adapter kostengünstiger bauen.

Es versteht sich, dass die einzelnen Arbeitszylinder durch unterschiedliche Anlenkgeometrien verschieden angeordnet werden und wirken können. Eine bauliche einfache Ausgestaltung sieht vor, dass der hydraulische Adapterklemmzylinder und die hydraulischen Fahrbahnzylinder im Wesentlichen parallel ausgerichtet zueinander angeordnet sind, wobei der hydraulische Adapterklemmzylinder den auswechselbaren Adaptern gegen die Wirkrichtung der hydraulischen Fahrbahnzylinder bewegt. Hierdurch kann der Adapter immer in engem und stabilem Kontakt mit der Fahrbahnoberfläche gehalten werden, wodurch die Sicherheit an der Presse während der Vertikalbewegung des Adapters erhöht wird.

Ist ein hydraulischer Adapterklemmzylinder des Vertikalantriebs im Wesentlichen mittig unterhalb des auswechselbaren Adapters angeordnet, kann der auswechselbare Adapter vorteilhafter Weise zentrisch gegriffen und zentral verklemmt bzw. entsprechend zentrisch angetrieben werden.

Besonders platzsparend kann der Vertikalantrieb an der Presse realisiert werden, wenn der hydraulische Adapterklemmzylinder des Vertikalantriebs in einem Maschinentisch der Presse angeordnet ist.

Darüber hinaus kann konstruktiv besonders einfach der hydraulische Adapterklemmzylinder mit dem auswechselbaren Adapter zusammenwirken, wenn der auswechselbare Adapter unterseitig eine Aufnahme für Klemmmittel eines hydraulischen Adapterktemmzylinders aufweist.

Insbesondere der Vertikalantrieb ist vorteilhaft ausgestaltet, wenn er eine Höhenniveauregulierung mit einer versenkbaren Fahrbahnschiene umfasst. Mittels der vorgeschlagenen Höhenniveauregulierung kann der auswechselbare Adapter innerhalb der Presse besonders präzise vertikal bewegt und ausgerichtet werden. Hierzu ist es denkbar, dass der hydraulische Adapterklemmzylinder und die hydraulischen Fahrbahnzylinder mittels der Höhenniveauregulierung zu betätigen sind. Ebenso können anderweitige Ausgestaltungen, wie beispielsweise ein entsprechender Federtrieb oder ähnliches, hierzu vorgesehen sein.

Die versenkbare Fahrbahnschiene kann hierbei ein Teil des Maschinentisches der Presse sein, auf welchem der auswechselbare Adapter zumindest in seiner Pressposition abgestellt ist, bzw. diesen zumindest teilweise umgeben. Auf diese Weise kann der Adapter einfach in seine Pressposition verfahren und auch von dieser wieder entfernt werden. Es versteht sich, dass die versenkbare Fahrbahnschiene in vielfältiger Weise an der Presse ausgestaltet sein kann. Umgibt die versenkbare Fahrbahnschiene den Maschinentisch der Presseinheit zumindest teilweise, können Bereiche des Maschinentischs konstruktiv einfach durch die Fahrbahnschiene versenkbar ausgestaltet werden.

Darüber hinaus ist es vorteilhaft, wenn der Vertikalantrieb ein Vertikalauflager zum Führen des auswechselbaren Adapters aufweist. Hierdurch kann der auswechselbare Adapter zusätzlich geführt und fixiert werden, wodurch dieser innerhalb der Presse, insbesondere wenn der Vertikalantrieb dann angreift, präziser positioniert werden kann.

Nach einem weiteren Aspekt der Offenlegung wird eine gattungsgemäßen Presse offengelegt, welche einen Horizontalantrieb für den auswechselbaren Adapter mit einem fahrbaren Wechselwagen zum Verfahren des auswechselbaren Adapters auf einer Fahrbahn in einen Arbeitsbereich der Presse hinein oder aus einem Arbeitsbereich der Presseinheit hinaus aufweist und sich dadurch auszeichnet, dass der Horizontalantrieb einen Horizontalanschlag zum horizontalen Führen des auswechselbaren Adapters umfasst, welcher ein ortsfestes, pressenseitiges Kupplungsteil einer hydraulischen Kupplung umfasst. Vorteilhafter Weise entfallen hierdurch manuelle Justier- und/oder Anpassarbeiten.

Der Begriff "Horizontalantrieb" beschreibt im Sinne der Offenbarung eine Vorrichtung, mittels welcher der auswechselbare Adapter insbesondere von einer Rüstposition in eine Pressposition verfahren werden kann.

Vorteilhafter Weise umfasst der auswechselbare Adapter hierzu einen fahrbaren Wechselwagen, sodass selbst sehr massive und große Presseinheiten zwischen den einzelnen Positionen bewegt werden können.

Kumulativ ist es vorteilhaft, wenn der Horizontalanschlag ein ortsfestes Vertikalauflager für den auswechselbaren Adapter umfasst. Hierdurch kann die Presse einen sehr kompakten Aufbau erhalten und betriebssicher die hydraulische Kupplung geschlossen werden.

Nach einem weiteren Aspekt der Offenlegung wird eine gattungsgemäßen Presse offengelegt, welche sich durch eine hydraulische Kupplung mit einem adapterseitigen Kupplungsteil, mit einem pressenseitigen Kupplungsteil und mit einer Einrichtung zum Kuppeln der beiden Kupplungsteile auszeichnet, bei welcher das adapterseitige Kupplungsteil gegenüber dem pressenseitigen Kupplungsteil zumindest vertikal verlagerbar ist und bei welcher das pressenseitige Kupplungsteil neben dem Maschinentisch ein zusätzliches ortsfestes Vertikalauflager für den auswechselbaren Adapter aufweist.

Vorteilhafter Weise kann der auswechselbare Adapter mittels einer derartigen hydraulischen Kupplung in der Presse besonders präzise ausgerichtet und gut fixiert werden. Manuelle Justier- und/oder Anpassarbeiten entfallen dementsprechend. Eine präzise Ausrichtung des auswechselbaren Adapters innerhalb der Presse ist hinsichtlich der enorm

Vorzugsweise befindet sich die Kupplungseinrichtung seitlich an der Presseinheit, sodass im eigentlichen Arbeitsbereich der Presse kein Bauraum wegen der Kupplungseinrichtung verloren geht.

Umfasst die Kupplungseinrichtung sowohl ortsfeste als auch bewegliche Kupplungselemente, gelingt ein Kuppeln der beiden Kupplungsteile miteinander außerordentlich sicher.

Konstruktiv einfach können die beweglichen Kupplungselemente bereitgestellt werden, wenn sie wenigstens eine selbsttätige Kupplung umfassen, da dieser problemlos an eine bereits vorhandene Hydraulik der Presse angeschlossen werden kann. Insofern sind elektrische Stellmotoren oder dergleichen zum Verlagern der beweglichen Kupplungselemente nicht erforderlich, können kumulativ oder alternativ jedoch vorgesehen sein.

Die ortsfesten Kupplungselemente können konstruktiv vorteilhaft umgesetzt werden, wenn die ortsfesten Kupplungselemente einfache Zentrierstifte zum Zentrieren des auswechselbaren Adapters gegenüber dem ortsfesten Vertikalauflager umfassen. Vorzugsweise sind derartige Zentrierstifte in unmittelbarer Umgebung zu der Kupplungseinrichtung angeordnet, so dass ein etwaiger Verzug oder Versatz auf ein Minimum beschränkt werden kann.

Insbesondere können auch parallel zur Hebe- und/oder Senkeinrichtung Zentriermittel, vorzugsweise in Form einer Ausnehmung und eines Index- und Positionierbolzens, vorgesehen sein, wobei diese vorzugsweise ergänzend zu den Zentrierstiften wirksam werden können. So ist beispielsweise möglich, die Zentriermittel an einem ersten Vertikalauflager, beispielsweise an einer Bodenplatte, vorzusehen, während die Zentrierstifte an einem weiteren Vertikalauflager vorgesehen sind.

Eine weiterführende vorteilhafte Ausgestaltung der Offenbarung sieht vor, dass die Presse zum Fuhren des auswechselbaren Adapters gegenüber dem Maschinentisch umfasst. Mittels der Index- bzw. Positionierbolzen kann der auswechselbare Adapter schon zum Beginn eines Absenkvorgangs mittels des Vertikalantriebs am Maschinentisch und im Bereich der Fahrbahn vorpositioniert werden, sodass die Gefahr verringert ist, dass es zu Fehlpositionierungen in der endgültigen Pressposition kommt. Insbesondere im Zusammenspiel mit der vorstehend erläuterten Kupplung kann hierdurch ergänzend vermieden werden, dass die Kupplungselemente der Kupplungseinrichtung vor dem Erstkontakt nicht richtig übereinander vorpositioniert sind, wobei ggf. durch die Zentrierstifte eine Feinpositionierung im Bereich der hydraulischen Kupplung erfolgen kann.

Während die vorstehend beschriebene Kupplungseinrichtung seitlich des Adapters vorgesehen ist, also vorzugsweise im Bereich des ortsfesten Vertikalauflagers, befinden sich die vorliegenden Index- und Positionierbolzen idealerweise an der Unterseite des auswechselbaren Adapters. Aufgrund ihrer relativ geringen Bauhöhe stören sie dort nicht, ermöglichen dort jedoch einen schnellen Kontakt zum Maschinentisch.

Auch ist es vorteilhaft, wenn die hydraulische Kupplung sogleich einen Horizontalanschlag zum horizontalen Führen des auswechselbaren Adapters umfasst, wodurch ein Einfahren des auswechselbaren Adapters in die Presse hinein vorteilhaft unterstützt bzw. in der Tiefe begrenzt werden kann.

Nach einem weiteren Aspekt der Offenbarung wird eine Presse zur Herstellung eines Formteils eines rieselfähigen Material mit einem auswechselbaren Adapter umfassend eine Presseinheit zum Aufnehmen einer Matrize beschrieben, wobei die Presse sich durch eine Wechselautomatik mit Sensoren zum automatischen Verfahren des auswechselbaren Adapters in einen Arbeitsbereich der Presse hinein oder aus dem Arbeitsbereich der Presse heraus auszeichnet.

Eine derartige sensorunterstützte Wechselautomatik gewährleistet vorteilhafter Weise stets einen betriebssicheren Verfahrensablauf hinsichtlich einer Auswechslung des jeweiligen Adapters, was insbesondere hinsichtlich Pressen mit großen und schweren Presseinheiten vorteilhaft ist.

Besonders vorteilhaft ist es, wenn die Wechselautomatik insbesondere eine Einrichtung zum Messen bzw. zum Steuern der Geschwindigkeit eines fahrbaren Wechselwagens des auswechselbaren Adapters umfasst. Neben einer Überwachung der korrekten Fahrwege und Fahrdistanzen des fahrbaren Wechselwagens ist insbesondere eine Geschwindigkeitssteuerung besonders wichtig, da hierdurch die Gefahr verringert werden kann, dass es durch falsche Geschwindigkeiten zu Unfällen beim Wechseln eines Adapters kommen kann. Insofern wird hierdurch auch die Arbeitssicherheit signifikant erhöht.

Die Aufgabe der Erfindung wird von einem Verfahren zum Wechseln einer Matrize an einer Presse zur Herstellung eines Formteils aus einem rieselfähigen Material, bei welchem ein die Matrize umfassender auswechselbarer Adapter aus einer Rüstposition in eine Pressposition oder umgekehrt überführt werden kann, gelöst, wobei sich das Verfahren dadurch auszeichnet, dass die Matrize von einer hydraulischen Zylindereinheit angetrieben wird, bei welcher ein Zylindergehäuse der hydraulischen Zylindereinheit als Aktor gegenüber einem einen feststehenden Ringkolben als Bestandteil des Stators an der Zylindereinheit aufweisenden Zylinderkolben der hydraulischen Zylindereinheit als Stator verlagert wird und hierdurch die Matrize von dem Zylindergehäuse angetrieben wird, wobei sowohl der Zylinderkolben als auch das Zylindergehäuse der hydraulischen Zylindereinheit konzentrisch um eine mittlere Pressachse der Presse herum verlagert werden.

Dieses Verfahren zeichnet sich insbesondere durch eine mehrstufige Ankopplung des auswechselbaren Adapters an die Presse aus. Gemäß der vorliegenden Offenbarung wird diese mehrstufige Ankopplung im Wesentlichen lediglich durch eine Vertikalbewegung erzielt, wodurch sich der Austausch einer Matrize bzw. das Umrüsten der Presse auf ein neues Formteil denkbar einfach gestaltet. Insofern kann die Rüstzeit der Presse wesentlich verkürzt werden.

Eine bevorzugte Verfahrensvariante sieht vor, dass der auswechselbare Adapter, vorzugsweise mittels eines Adapterklemmzylinders, vertikal nach unten verlagert und hierbei gegenüber dem Maschinentisch verklemmt wird. Hierdurch kann die Presseinheit schnell und einfach in einen betriebsbereiten Zustand überführt werden.

Auch kann der auswechselbare Adapter lediglich mit einer einzigen Vertikalbewegung sowohl zuerst an dem Maschinentisch vorpositioniert, anschließend an dem weiteren Vertikalauflager zentriert und angekoppelt als auch gegenüber dem Maschinentisch verklemmt werden. Vorzugsweise gelingt dies mit einer einzigen kontinuierlichen Vertikalbewegung, sodass der auswechselbare Adapter schnell und problemlos innerhalb der Presse in seiner Pressposition verankert werden kann.

Kumulativ ist es vorteilhaft, wenn der horizontal in die Pressposition hinein bewegte auswechselbare Adapter auf den Maschinentisch abgesenkt wird, wobei der auswechselbare Adapter in einer ersten Absenkphase zuerst mittels Index- und Positionierbolzen an dem Maschinentisch vorpositioniert und anschließend in einer weiteren Absenkphase mittels Zentrierstifte an dem weiteren Vertikalauflager zentriert und angekuppelt sowie gegenüber dem Maschinentisch verklemmt wird. Ein derartiger Verfahrensablauf reduziert die Gefahr eines fehlerhaften Einsetzens des Adapters in die Presse erheblich und ist auch unabhängig von den übrigen Merkmalen vorliegender Offenbarung bei einem Verfahren zum Wechseln einer Matrize an einer Presse zur Herstellung eines Formteils aus einem rieselfähigen Material, bei welchem ein die Matrize umfassender auswechselbarer Adapter aus einer Rüstposition in eine

Darüber hinaus ist bei einer weiteren Verfahrensvariante vorteilhaft vorgesehen, dass mit der Vertikalbewegung des auswechselbaren Adapters eine hydraulische Kupplung geschlossen bzw. geöffnet wird.

Es versteht sich, dass insbesondere die vorgeschlagenen Verfahrensvarianten auch beliebig untereinander kombiniert werden können, um vorteilhafte Effekte beim Auswechseln einer Matrize einer Presse zu erzielen.

An dieser Stelle sei der Vollständigkeit halber noch angemerkt, dass die hier beschriebenen Zylinder in Ganze oder teilweise beispielsweise auch pneumatisch betrieben werden können. ebenso sind andere Antriebe, wie beispielsweise elektrische oder magnetische Antriebe entsprechend denkbar.

Weitere Vorteile, Ziele und Eigenschaften vorliegender Erfindung werden anhand nachfolgender Beschreibung einer Pulverpresse zur Herstellung eines Formteils aus einem rieselfähigen Material erläutert, die insbesondere auch in anliegender Zeichnung dargestellt ist. In der Zeichnung zeigen:
- Figur 1A: schematisch eine teilweise geschnittene Seitenansicht der Presse mit einem noch nicht abgesenkten auswechselbaren Adapter in einer Pressposition;
- Figur 1B: schematisch eine teilweise geschnittene Seitenansicht der Presse mit einem auswechselbaren Adapter in einer Rüstposition vor dem Einfahren in die in der Figur 1A gezeigte Pressposition:
- Figur 2: schematisch eine weitere teilweise geschnittene Seitenansicht der Presse aus den Figuren 1A und 1B mit dem teilweise abgesenkten auswechselbaren Adapter; und
- Figur 3: schematisch eine weitere teilweise geschnittene Seitenansicht der Presse aus den Figuren 1A, 1B und 2 mit dem vollständig abgesenkten auswechselbaren Adapter.

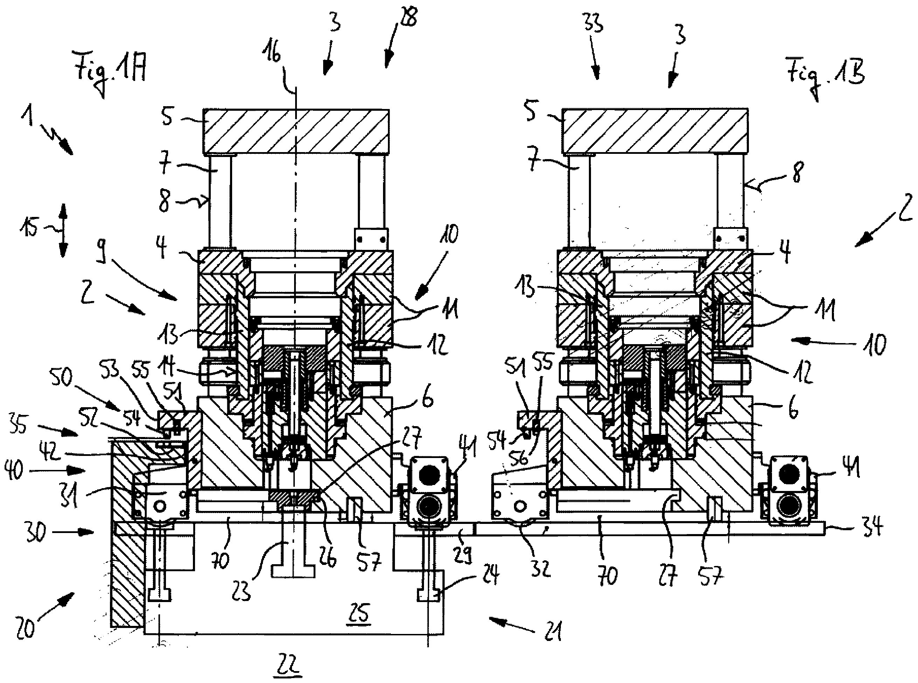

Ein erstes in den Figuren 1 bis 3 dargestelltes Ausführungsbeispiel zeigt eine Presse 1 zur Herstellung eines Formteils aus einem rieselfähigen Material mit einem auswechselbaren Adapter 2 umfassend eine Presseinheit 3 mit einer Matrizenaufnahmeplatte 4 zum Aufnehmen einer hier nicht dargestellten Matrize.

Die Presseinheit 3 weist eine obere Traverse 5 und eine untere Traverse 6 auf, die mittels Säulen 7 (hier nur exemplarisch beziffert) voneinander beabstandet gehalten werden. Die Säulen 7 sind in diesem Ausführungsbeispiel als Gleiteinrichtungen 8 ausgestaltet, an welchen insbesondere die Matrizenaufnahmeplatte 4 entlang gleiten und so innerhalb der Presseinheit 3 in der Höhe verschiebbar gelagert ist. Bei diesem Ausführungsbeispiel umfasst die Presseinheit 3 insgesamt vier Säulen 7.

Zum Antreiben der Matrizenaufnahmeplatte 4 umfasst die Presseinheit 3 eine entsprechende Vorrichtung 9 zum Antreiben der hier nicht dargestellten Matrize bzw. der Matrizenaufnahmeplatte 4, welche eine Zylindereinheit 10 mit einem zweigeteilten Zylindergehäuse 11 und mit einem Zylinderkolben 12 umfasst. Außergewöhnlich hieran ist, dass das Zylindergehäuse 11 der Aktor der Zylindereinheit 10 und der Zylinderkolben 12 der Stator der Zylindereinheit 10 ist: also das Zylindergehäuse 11 das bewegte Bauteil der Zylindereinheit 10 und der Zylinderkolben 12 das ortsfeste Bauteil hinsichtlich der Zylindereinheit 10 ist.

Dies bedeutet, dass das Zylindergehäuse 11 gegenüber dem Zylinderkolben 12 verlagert wird, wodurch der enorme Vorteil erzielt werden kann, dass umliegendes rieselfähiges Material wesentlich schlechter, idealerweise gar nicht, an empfindliche Bereiche der Zylindereinheit 10 gelangen kann. Hierdurch ist die Gefahr von erhöhtem Verschleiß, beispielsweise an Dichtungseinrichtungen eines hydraulischen Systems der Zylindereinheit 10 verringert, wodurch sich der Wartungsaufwand bzw. die Wartungshäufigkeit vorteilhaft reduzieren lässt.

Dies ermöglicht unter anderem auch einen wesentlich schnelleren und kostengünstigeren Wechsel der Matrize an der Presse 1, da durch den geringeren Wartungsaufwand der Adapter 2 wesentlich schneller ausgewechselt werden kann als bisher üblich.

Es versteht sich, dass der Stator in vielfältiger Gestalt realisiert sein kann. Als besonders vorteilhaft hat sich erwiesen, dass der Zylinderkolben als ein in Bezug auf die Zylindereinheit 10 feststehender Ringkolben 13 ausgestaltet ist, wie dieses bei dem vorliegenden Ausführungsbeispiel umgesetzt ist.

Hingegen ist das Zylindergehäuse 11 gegenüber der Zylindereinheit 10 außen - durch Bezugsziffer 14 dargestellt - am Stator der Zylindereinheit 10 verschieblich, vorzugsweise translatorisch 15 verlagerbar, angeordnet.

Das Zylindergehäuse 11 ist hierbei fest mit der Matrizenaufnahmeplatte 4 verbunden.

Sowohl der Stator als auch der Aktor der Zylindereinheit 10 sind bei diesem Ausführungsbeispiel konzentrisch um die mittlere Pressachse 16 der Presse herum angeordnet, wodurch eine sehr stabile Zylindereinheit 10 entsteht.

Gemäß eines weiteren Aspektes der vorliegenden Offenbarung zeichnet sich die Presse 1 durch einen Vertikalantrieb 20 für den auswechselbaren Adapter 2 aus. Der Vertikalantrieb 20 umfasst eine Einrichtung 21 zum Heben und/oder Senken des auswechselbaren Adapters 2, wobei die Hebe- und/oder Senkeinrichtung 21 bei diesem Ausführungsbeispiel in ihren wesentlichen Baugruppen unterseitig - dargestellt durch die Bezugsziffer 22 - des auswechselbaren Adapters 2 angeordnet ist.

Die Hebe- und/oder Senkeinrichtung 21 ist mit einem hydraulischen Adapterklemmzylinder 23 und vier hydraulischen Fahrbahnzylinder 24 (hierbei exemplarisch beziffert) ausgerüstet. Sowohl der Adapterklemmzylinder 23 als auch die Fahrbahnzylinder 24 sind in einer Bodenplatte 25 der Presse 1 vorgesehen. Hierbei sind der Adapterklemmzylinder 23 zentral und die Fuhrbahnzylinder 24 jeweils in Eckbereichen des Fundaments 25 angeordnet.

Der Adapterklemmzylinder 23 weist oberseitig einen Klemmkopf 26 auf, der in eine korrespondierende Hinterschneidung 27 der unteren Traverse 6 eingreifen kann, wenn der auswechselbare Adapter 2 in eine Pressposition 28 hinein gefahren wird bzw. ist. Eine derartige Pressposition 28 ist in den Figuren 1A, 2 und 3 dargestellt.

Die Bodenplatte 25 bildet zusammen mit versenkbaren Fahrbahnschienen 29 einen Maschinentisch 30 der Presse 1. Die versenkbaren Fahrbahnschienen 29 sowie die hydraulischen Fahrbahnzylinder 24 sind Bestandteile einer Höhenniveauregulierung (hier nicht explizit beziffert) des Vertikalantriebs 20 und sind im Wesentlichen parallel ausgerichtet zu dem hydraulischen Adapterklemmzylinder 23. Insofern können die Hauptwirkrichtungen der hydraulischen Fahrbahnzylinder 24 baulich einfach entgegengesetzt der Hauptwirkrichtung des hydraulischen Adapterklemmzylinders 23 ausgerichtet werden, wodurch der Adapter 2 immer gegen die versenkbaren Fahrbahnschienen 29 gedrückt und der auswechselbare Adapter 2 somit mit seinem Fahrwerk 31 stets einen festen Kontakt zu den versenkbaren Fahrbahnschienen 29 halten kann.

Das Fahrwerk 31 umfasst in diesem Ausführungsbeispiel Räder 32 (hier nur exemplarisch beziffert).

Es versteht sich, dass das Fahrwerk 31 jedoch auch anderer Gestalt sein kann, beispielsweise mit einer entsprechenden Pneumatik ausgestattet sein kann, wodurch der auswechselbare Adapter 2 zwischen einer Rüstposition 33 (siehe Figur 1B) und der Pressposition 28 auf einem Luftkissen über die Fahrbahn 34 gleiten kann.

Eine gute Vertikalführung des auswechselbaren Adapters 2 ergibt sich in der Pressposition 28 auch durch ein Vertikalauflager 35 des Vertikalantriebs 20. wie weiter unten noch beschrieben wird.

Zum vorteilhaften Bewegen des auswechselbaren Adapters 2 zwischen der Pressposition 28 und der Rüstposition 33 weist der auswechselbare Adapter 2 einen Horizontalantrieb 40 mit einem fahrbaren Wechselwagen 41 auf. Der austauschbare Adapter 2 kann somit vorteilhafter Weise mittels einer einfachen horizontalen Translationsbewegung zwischen der Pressposition 28 und der Rüstposition 33 verlagert werden.

Zum horizontalen Führen des auswechselbaren Adapters 2 umfasst der Horizontalantrieb 40 auch einen Honzontalanschlag 42, der insbesondere als Einfahrbegrenzung für den Wechselwagen 41 dient. Hierdurch kann insbesondere schnell und betriebssicher eine horizontale Vorpositionierung des auswechselbaren Adapters 2 gewährleistet werden.

Baulich besonders einfach gestaltete sich die vorliegende Presse 1 dadurch, dass der Horizontalanschlag 42 gleichzeitig das Vertikalauflager 35 für den auswechselbaren Adapter 2 trägt. Gegebenenfalls kann der Horizontalanschlag 42 an seiner dem auswechselbaren Adapter 2 zugewandten Seite eine Sensorik zum Erfassen der Position und/oder Geschwindigkeit des Wechselwagens 4t aufweisen. Eine derartige Sensorik kann jedoch auch an anderer geeigneter Stelle, auch an dem Wechselwagen 41 oder dem Adapter 2. vorgesehen sein. Insbesondere ist es auch denkbar, dass an dem Horizontalanschlag 42, oder an einer anderen geeigneten ortsfesten Stelle, ein Teil dieser Sensorik vorgesehen ist, während ein anderer Teil an dem Wechselwagen 41 oder an dem Adapter 2 vorgesehen ist und beide dieser Teile der Sensorik miteinander wechselwirken.

Die Presse 1 ist insbesondere auch durch eine Wechselautomatik, die mit den vorstehend genannten Sensoren zum automatischen Verfahren des auswechselbaren Adapters 2 in einen Arbeitsbereich, bei diesem Ausführungsbeispiel die Pressposition 28. der Presse 1 hinein oder aus dem Arbeitsbereich der Presse 1 heraus zusammenarbeitet, weiterentwickelt.

Zur Steuerung der Geschwindigkeit des fahrbaren Wechselwagens 41 des auswechselbaren Adapters 2 besitzt die Wechselautomatik vorteilhafter Weise eine Einrichtung zum Steuern der Geschwindigkeit. Insofern ist die Gefahr die Presse 1 bzw. den auswechselbaren Adapter 2 durch eine ungeeignete Geschwindigkeit zu beschädigen nahezu vollständig ausgeschlossen, da der Wechselwagen 41 dann sanft an den Horizontalanschlag 42 heranfahren kann.

Hinsichtlich eines weiteren Aspektes der vorliegenden Offenbarung weist die Presse 1 eine hydraulische Kupplung 50 mit einem adapterseitigen Kupplungsteil 51 und mit einem pressenseitigen Kupplungsteil 52 auf.

Darüber hinaus verfügt die hydraulische Kupplung 50 über eine Einrichtung 53 zum Kuppeln der beiden Kupplungsteile 51 und 52, wobei die Kupplungseinrichtung 53 sowohl über ortsfeste Kupplungselemente 54 als auch über bewegliche Kupplungselemente 55 verfügt.

Mit dem adapterseitigen Kupplungsteil 51 kann sich der auswechselbare Adapter 2 zusätzlich vertikal abstützen, wozu der adapterseitige Kupplungsteil 51 auf dem pressenseitigem Kupplungsteil 52 abgelegt wird. Eine Zentrierung des auswechselbaren Adapters 2 im Bereich der hydraulischen Kupplung 50 erfolgt mittels der ortsfesten Kupplungselemente 54. Ist der auswechselbare Adapter 2 derart innerhalb der Presse vorzentriert, kann die hydraulische Kupplung 50 zusätzlich durch die beweglichen Kupplungselemente 55 gekuppelt werden, wobei die beweglichen Kupplungselemente 55 wenigstens eine selbsttätige Kupplung 56 (der Übersichtlichkeit halber lediglich in Figur 1B beziffert) umfassen.

Das pressenseitige Kupplungsteil 52 ist baulich besonders einfach durch das Vertikalauflager 35 des Vertikalantriebs 20 ausgestaltet, wobei die ortsfesten Kupplungselemente 54 als Zentrierstifte (der Übersichtlichkeit halber nicht zusätzlich beziffert) in entsprechende Bohrungen des ortsfesten Vertikalauflagers 35 eingreifen. Insofern ist eine unbeabsichtigte intrinsische Verspannung des Adapters 2 innerhalb der Presse 1, durch welche die hydraulische Kupplung überbeansprucht werden könnte, ausgeschlossen.

Darüber hinaus umfasst die hydraulische Kupplung 50 bei diesem Ausführungsbeispiel im weitesten Sinne noch wenigstens den hydraulischen Adapterklemmzylinder 23 zum vertikalen Verlagern des auswechselbaren Adapters 2 gegenüber dem Maschinentisch 30. sodass der adapterseitige Kupplungsteil 51 und der pressenseitige Kupplungsteil 52 beim Absenken des auswechselbaren Adapters 2 miteinander gekuppelt werden können. Insofern zeichnet sich die hydraulische Kupplung 50 in diesem Ausführungsbeispiel in ihrer Gesamtheit auch durch den hydraulischen Adapterklemmzylinder 23 aus.

Die Presse 1 weist des Weiteren Index- bzw. Positionierbolzen 57 zum Fuhren des auswechselbaren Adapters 2 direkt am Maschinentisch 30 auf, die bei diesem Ausführungsbeispiel zusätzlich zu den zuvor beschriebenen Kupplungselementen 54 und 55 der Kupplungseinrichtung 53 der hydraulischen Kupplung 50 zugeordnet werden können. Hierdurch kann der auswechselbare Adapter 2 an dem Maschinentisch 30, noch bevor die Kupplungselemente 54 und 55 der Kupplungseinrichtung 53 zwischen dem adapterseitigem Kupplungsteil 51 und pressenseitigem Kupplungsteil 52 greifen, innerhalb der Presse 1 vorpositioniert werden, was dementsprechend auch unabhängig von den hydraulischen Kupplung 50 vorteilhaft sein kann, im Zusammenspiel mit der hydraulischen Kupplung 50 jedoch insbesondere die übrigen ortsfesten Kupplungselemente 54. wie die Zentrierstifte, vor einer Überbelastung schützt, welche regelmäßig feiner und mithin weniger robust ausgelegt sein können.

Der wesentliche Verfahrensablauf zum Wechseln einer Matrize an der Presse 1 gestaltet sich bei diesem Ausführungsbeispiel folgendermaßen:

Der auswechselbare Adapter 2 wird aus der Presseposition 28 (siehe Figur 1A) in die Rüstposition 33 (siehe Figur 1B) überführt. Dort kann entweder die Matrize aus der Matrizenaufnahmeplatte 4 herausgenommen werden und durch eine andere Matrize ausgetauscht werden, sodass anschließend der auswechselbare Adapter 2 aus der Rüstposition 33 wieder in die Presseposition 28 verlagert wird. Oder der gesamte Adapter 2 wird durch einen weiteren auswechselbaren Adapter 2 ausgetauscht, der zuvor mit einer entsprechenden Matrize ausgerüstet wurde. Jedenfalls wird der entsprechend mit der benötigten Matrize präparierte Adapter 2 aus der Rüstposition 33 wieder in die Presseposition 28 überfuhrt. Hierbei wird der auswechselbare Adapter 2 mit seinen Rädern 32 über die Fahrbahn 34 auf die versenkbare Fahrbahnschiene 29. welche den Maschinentisch 30 der Presseinheit 3 zumindest teilweise umgibt, gerollt. Bis zu diesem Zeitpunkt besteht zwischen der Fahrbahn 34 bzw. der versenkbaren Fahrbahnschiene 29 bzw. dem Fundament 25 ein erster Zwischenraum 70 mit einem Abstand, der genügend große gewählt ist, dass sich die Index- und Positionierbolzen 57 oberhalb der Fahrbahn 34 bzw. oberhalb des Maschinentischs 30 befinden und dass die oben beschriebenen Bewegungsabläufe betriebssicher vonstattengehen können. Der Abstand des ersten Zwischenraums 70 ist bei diesem Ausführungsbeispiel durch den gewählten Durchmesser der Räder 32 fest vorgegeben.

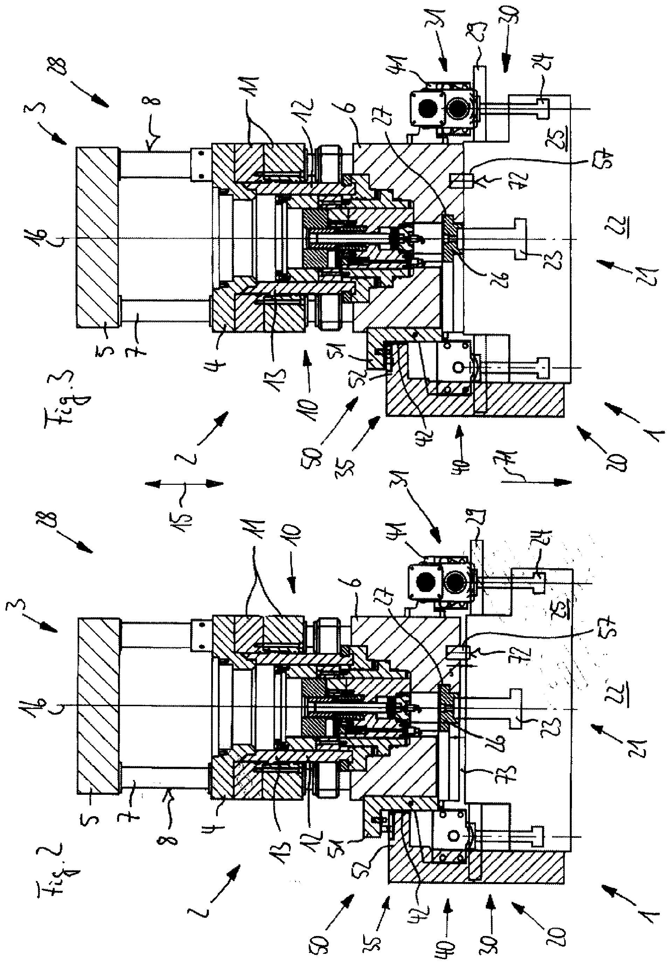

Ist der auswechselbare Adapter 2 mittels seines Horizontalantriebs 40 bis an den Horizontalanschlag 42 herangeführt worden (siehe Figur 1A), wird der auswechselbare Adapter 2 in einer ersten Absenkphase (siehe Figur 2) mittels der versenkbaren Fahrbahnschiene 29 entlang der mittleren Pressachse 16 innerhalb der Presse 1 abgesenkt. Hierbei wird der auswechselbare Adapter 2 mittels einer Vertikalbewegung 71 (siehe Figuren 2 und 3) gegenüber dem Maschinentisch 30 vorpositioniert, indem die Index- und Positionierbolzen 57 sich in entsprechende Ausnehmungen 72 im Fundament 25 einfädeln.

Im Fortgang der Vertikalbewegung 71 wird der auswechselbare Adapter 2 über die zuvor beschriebene hydraulische Kupplung 50 an dem Vertikalauflager 35 zusätzlich zentriert und durch Schließen der Kupplung 50 auch hydraulisch angekuppelt.

Die Vertikalbewegung 71 wird solange fortgesetzt, bis der erste Zwischenraum 70 (Figuren 1A und 1B) sich sukzessive verringert (siehe weiteren Zwischenraum 73; Figur 2). sodass letztendlich der auswechselbare Adapter 2 mit seiner unteren Traverse 6 einsatzbereit auf der Bodenplatte 25 der Presse 1 aufsitzt und durch den hydraulischen Adapterklemmzylinder 23 an dem Maschinentisch 30 verklemmt ist (Figur 3).

Die Vertikalbewegung 71 runter- wie hochwärts wird im Wesentlichen durch den Adapterklemmzylinder 23 initiiert.

Um die Matrize mittels der Matrizenaufnahmeplatte 4 in eine Betriebsposition verlagern zu können, ohne das hierbei die Gefahr einer übermäßigen Verschmutzung durch ein rieselfähiges Material besteht, wird das Zylindergehäuse 11 der hydraulischen Zylindereinheit 10 im Sinne eines Aktors gegenüber dem Zylinderkolben 12 der hydraulischen Zylindereinheit 10 verlagert, wodurch die Matrize bzw. die Matrizenaufnahmeplatte 4 unmittelbar von dem Zylindergehäuse 11 angetrieben wird.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses erläuterte Ausführungsbeispiel.

### Bezugszeichenliste:

| | | | |
|---|---|---|---|
| 1 | Presse | 29 | Fahrbahnschiene |
| 2 | auswechselbarer Adapter | 30 | Maschinentisch |
| 3 | Presseinheit | 31 | Fahrwerk |
| 4 | Matrizenaufnahmeplatte | 32 | Räder |
| 5 | obere Traverse | 33 | Rüstposition |
| 6 | untere Traverse | 34 | Fahrbahn |
| 7 | Säulen | 35 | Vertikalauflager |
| 8 | Gleiteinrichtung | | |
| 9 | Antriebsvorrichtung | 40 | Horizontalantrieb |
| 10 | Zylindereinheit | 41 | Wechselwagen |
| 11 | Zylindergehäuse | 42 | Horizontalanschlag |
| 12 | Zylinderkolben | | |
| 13 | Ringkolben | 50 | hydraulische Kupplung |
| 14 | außen | 51 | adapterseitiges Kupplungsteil |
| 15 | translatorisch | 52 | pressenseitiges Kupplungsteil |
| 16 | mittlere Pressachse | 53 | Einrichtung zum Kuppeln |
| | | 54 | ortsfeste Kupplungselemente |
| 20 | Vertikalantrieb | 55 | bewegliche Kupplungselemente |
| 21 | Hebe- und/oder Senkeinrichtung | 56 | selbsttätige Kupplung |
| 22 | unterseitig | 57 | Index- und Positionierbolzen |
| 23 | Adapterklemmzylinder | | |
| 24 | Fahrbahnzylinder | 70 | erster Zwischenraum |
| 25 | Bodenplatte | 71 | Vertikalbewegung |
| 26 | Klemmkopf | 72 | Ausnehmungen |
| 27 | Hinterschneidung | 73 | weiterer Zwischenraum |
| 28 | Pressposition | | |

## Patentansprüche

1. Presse (1) zur Herstellung eines Formteils aus einem rieselfähigen Material mit einem auswechselbaren Adapter (2) umfassend eine Presseinheit (3) zum Aufnehmen einer Matrize und mit einer Vorrichtung (9) zum Antreiben der Matrize umfassend eine hydraulische Zylindereinheit (10) mit einem Zylindergehäuse (11) und mit einem Zylinderkolben (12), wobei die Presseinheit (3) eine obere Traverse (5) und eine untere Traverse (6) aufweist, die mittels Säulen (7) voneinander beabstandet gehalten sind, an welchen eine Matrizenaufnahmeplatte (4) der Presseinheit (3) verschiebbar gelagert ist, **dadurch gekennzeichnet, dass** das Zylindergehäuse (11) der Aktor der Zylindereinheit (10) und der Zylinderkolben (12) der Stator der hydraulischen Zylindereinheit (10) ist, wobei der Zylinderkolben (12) als ein in Bezug auf die Zylindereinheit (10) feststehender Ringkolben (13) als Bestandteil des Stators an der hydraulischen Zylindereinheit (10) ausgestaltet ist, wobei sowohl der Zylinderkolben (12) als auch das Zylindergehäuse (11) der hydraulischen Zylindereinheit (10) konzentrisch um eine mittlere Pressachse (16) der Presse (1) herum angeordnet sind.

2. Presse (1) nach Anspruch 1, **dadurch gekennzeichnet, dass** das Zylindergehäuse (11) außen (14) am Stator der Zylindereinheit (10) verschieblich, vorzugsweise translatorisch (15) verlagerbar, angeordnet ist.

3. Presse (1) nach Anspruch 1 oder 2, **dadurch gekennzeichnet, dass** das Zylindergehäuse (11) ortsfest an einer Matrizenaufnahme (4) der Matrize angeordnet ist.

4. Verfahren zum Wechseln einer Matrize an einer Presse (1) zur Herstellung eines Formteils aus einem rieselfähigen Material, bei welchem ein die Matrize umfassender auswechselbarer Adapter (2) aus einer Rüstposition in eine Pressposition oder umgekehrt überführt werden kann, **dadurch gekennzeichnet, dass** die Matrize von einer hydraulischen Zylindereinheit (10) angetrieben wird, bei welcher ein Zylindergehäuse (11) der hydraulischen Zylindereinheit (10) als Aktor gegenüber einem einen feststehenden Ringkolben (13) als Bestandteil des Stators an der Zylindereinheit (10) aufweisenden Zylinderkolben (12) der hydraulischen Zylindereinheit (10) als Stator verlagert wird und hierdurch die Matrize von dem Zylindergehäuse (11) angetrieben wird, wobei sowohl der Zylinderkolben (12) als auch das Zylindergehäuse (11) der hydraulischen Zylindereinheit (10) konzentrisch um eine mittlere Pressachse (16) der Presse (1) herum verlagert werden.

## Claims

1. A press (1) for producing a moulded part of a free-flowing material with an exchangeable adapter (2) comprising a press unit (3) for receiving a die and with a device (9) for driving the die comprising a hydraulic cylinder unit (10) with a cylinder housing (11) and a cylinder piston (12), wherein the press unit (3) has an upper crossbar (5) and a lower crossbar (6) that are spaced apart from one another by means of columns (7), on which a die receptacle plate (4) of the press unit (3) is displaceably mounted, **characterized in that** the cylinder housing (11) is the actuator of the cylinder unit (10) and the cylinder piston (12) is the stator of the hydraulic cylinder unit (10), wherein the cylinder piston (12) is realized in the form of an annular piston (13), which is stationary with respect to the cylinder unit (10) and forms part of the stator on the hydraulic cylinder unit (10), and wherein the cylinder piston (12) and the cylinder housing (11) of the hydraulic cylinder unit (10) are arranged concentrically around a central press axis (16) of the press (1).

2. The press (1) according to claim 1, **characterized in that** the cylinder housing (11) is arranged outside (14) on the stator of the cylinder unit (10) so as to be displaceable, preferably displaceable in a translatory manner (15).

3. The press (1) according to claim 1 or 2, **characterized in that** the cylinder housing (11) is arranged stationary on a die receptacle (4) of the die.

4. A method for changing a die on a press (1) for producing a moulded part of a free-flowing material, in which an exchangeable adapter (2) comprising the die can be transferred from a set-up position into a pressing position or vice versa, **characterized in that** the die is driven by a hydraulic cylinder unit (10), in which a cylinder housing (11) of the hydraulic cylinder unit (10) in the form of an actuator is displaced relative to a cylinder piston (12) of the hydraulic cylinder unit (10) in the form of a stator, which has a stationary annular piston (13) that forms part of the stator on the cylinder unit (10), and the die is thereby driven by the cylinder housing (11), wherein the cylinder piston (12) and the cylinder housing (11) of the hydraulic cylinder unit (10) are displaced concentrically around a central press axis (16) of the press (1).

## Revendications

1. Presse (1) pour produire une pièce moulée à partir d'un matériau s'écoulant avec un adaptateur échangeable (2) comprenant une unité de presse (3) destinée à recevoir une matrice et avec un dispositif (9) destiné à entraîner la matrice comprenant une unité de vérin hydraulique (10) avec un boîtier de vérin (11) et avec un piston de vérin (12), sachant que l'unité de presse (3) comporte une traverse supérieure (5) et une traverse inférieure (6), qui sont maintenues à distance l'une de l'autre au moyens de colonnes (7), sur lesquelles est logée de façon mobile une plaque de réception de matrice (4) de l'unité de presse (3), **caractérisée en ce que** le boîtier de vérin (11) est l'actionneur de l'unité de vérin (10) et le piston de vérin (12) est le stator de l'unité de vérin hydraulique (10), sachant que le piston de vérin (12) est constitué sur l'unité de vérin hydraulique (10) comme un piston annulaire fixe (13) par rapport à l'unité de vérin (10) en tant que composant du stator, sachant que tant le piston de vérin (12) que le boîtier de vérin (11) de l'unité de vérin hydraulique (10) sont disposés de façon concentrique autour d'un axe de compression central (16) de la presse (1).

2. Presse (1) selon la revendication 1, **caractérisée en ce que** le boîtier de vérin (11) est disposé mobile à l'extérieur (14) sur le stator de l'unité de vérin (10), de préférence pouvant être déplacé de façon translatoire (15).

3. Presse (1) selon la revendication 1 ou 2, **caractérisée en ce que** le boîtier de vérin (11) est disposé de façon fixe sur un logement de matrice (4) de la matrice.

4. Procédé pour changer une matrice sur une presse (1) pour produire une pièce moulée à partir d'un matériau s'écoulant, pour lequel un adaptateur (2) échangeable comprenant la matrice peut être transféré d'une position de montage dans une position de compression ou inversement, **caractérisé en ce que** la matrice est entraînée par une unité de vérin hydraulique (10), pour laquelle un boîtier de vérin (11) de l'unité de vérin hydraulique (10) est déplacé en tant qu'actionneur par rapport à un piston de vérin (12) de l'unité de vérin hydraulique (10) en tant que stator, comportant un piston annulaire fixe (13) sur l'unité de vérin (10) en tant que composant du stator et la matrice est entraînée à cet effet par le boîtier de vérin (11), sachant que tant le piston de vérin (12) que le boîtier de vérin (11) de l'unité de vérin hydraulique (10) sont déplacés de façon concentrique autour d'un axe de compression central (16) de la presse (1).
